# EUROPÄISCHE PATENTSCHRIFT

(11) **EP 2 635 533 B1**
(45) Veröffentlichungstag und Bekanntmachung des Hinweises auf die Patenterteilung: **24.05.2017**
(21) Anmeldenummer: 11779162.4
(22) Anmeldetag: 31.10.2011
(51) Int. Cl.: C02F 1/463, C02F 1/461, C02F 11/04, C02F 101/10

(54) **VERFAHREN ZUR RÜCKGEWINNUNG VON PHOSPHATSALZEN AUS EINER FLÜSSIGKEIT**
METHOD FOR RECOVERING PHOSPHATE SALTS FROM A LIQUID
PROCÉDÉ DE RÉCUPÉRATION DES SELS DE PHOSPHATES CONTENUS DANS UN LIQUIDE

(30) Priorität: 06.11.2010 DE 102010050691
(43) Veröffentlichungstag der Anmeldung: 11.09.2013
(73) Patentinhaber: Fraunhofer-Gesellschaft zur Förderung der angewandten Forschung e.V., 80686 München (DE)
(72) Erfinder: BILBAO, Jennifer, 70569 Stuttgart (DE); BRYNIOK, Dieter, 72144 Dusslingen (DE); EGNER, Siegfried, 74740 Adelsheim (DE); FRANK, Daniel, 70197 Stuttgart (DE)
(74) Vertreter: DREISS Patentanwälte PartG mbB
(86) Internationale Anmeldenummer: PCT/EP2011/069118
(87) Internationale Veröffentlichungsnummer: WO 2012/059464

(56) Entgegenhaltungen:
- EP-A1- 0 100 538
- WO-A1-2010/087050
- US-A1- 2004 055 964
- VASUDEVAN S ET AL: "Remediation of phosphate-contaminated water by electrocoagulation with aluminium, aluminium alloy and mild steel anodes", JOURNAL OF HAZARDOUS MATERIALS, ELSEVIER, AMSTERDAM, NL, Bd. 164, Nr. 2-3, 30. Mai 2009 (2009-05-30), Seiten 1480-1486, XP026028152, ISSN: 0304-3894, DOI: 10.1016/J.JHAZMAT.2008.09.076 [gefunden am 2008-09-26]

## Beschreibung

Die Erfindung betrifft ein Verfahren zur vollständigen Abtrennung von Phosphat aus einer Flüssigkeit und Rückgewinnung von Phosphatsalzen, in einem Reaktor der mit zwei Gruppen von Elektroden unterschiedlicher Polarität ausgerüstet ist, wobei die Opferelektroden aus einem magnesiumhaltigen Werkstoff bestehen.

Phosphatsalze wie Magnesiumammoniumphosphat(im Folgenden als MAP abgekürzt) oder Kaliummagnesiumphosphat (im Folgenden als KMP abgekürzt) sind hochwertige Pflanzenhilfsstoffe für die eine hohe Nachfrage besteht. Die Elemente Stickstoff, Kalium, Magnesium und Phosphat, aus denen diese Pflanzenhilfsstoffe aufgebaut sind, sind typischerweise festen und flüssigen organischen Abfälle enthalten. Während Kalium, Magnesium und weitere Ionen in Form wasserlöslicher Kationen vorliegen, sind Stickstoff und Phosphat zum überwiegenden Teil an oder in organischer Substanz bzw. Zellmasse gebunden. Damit steht ein Großteil von Stickstoff und Phosphat nicht zur Produktion von Pflanzenhilfsstoffen zur Verfügung. Deshalb ist es notwendig, Stickstoff und Phosphat in ihre, für die Fällung geeignete, anorganische Form umzuwandeln.

Die spontane Ausfällung von MAP oder KMP ist limitiert durch die üblicherweise sehr niedrige Magnesium-Konzentration im Abwasser. Bekannt ist die Zugabe von Magnesiumhydroxid, Magnesiumoxid oder löslichen Magnesiumsalzen zur MAP-Fällung. Der Nachteil dabei ist die schlechte Löslichkeit der Oxide, sowie der salzähnlichen Hydroxide. Bei Zugabe von Magnesiumhydroxid oder Magnesiumoxid in fester Form, aber auch als Suspension zum Abwasser, lösen sich diese Verbindungen nur sehr langsam und zu einem geringen Anteil. Das führt dazu, dass kontinuierlich gerührt oder umgewälzt werden muss, was aber einen Mehraufwand an Technik und Energie und damit auch an Kosten verursacht. Darüber hinaus müssen beide Verbindungen aufgrund ihrer schlechten Löslichkeit überstöchiometrisch dosiert werden, da andernfalls eine unvollständige Fällung der gewünschten Pflanzenhilfsstoffe eintritt und erhebliche Mengen Phosphat im Abwasser verbleiben. Werden Magnesiumsalze vorab in eine Lösung überführt, verschlechtert sich durch die Verdünnung mit Wasser der Wirkungsgrad des Verfahrens.

Der optimale pH-Wert zur Fällung von MAP liegt bei 9. Abwasser hat normalerweise pH-Werte zwischen 5 und 7. Deswegen wird zu Anhebung des pH-Wertes eine Lauge zugegeben. Bei Verwendung einer löslichen Lauge, wie beispielsweise Natriumhydroxid, führt das zu Problemen durch die Verdünnung des Abwassers. Bei Verwendung einer schlecht löslichen Lauge wie z. B. Magnesiumhydroxid löst sich diese kaum in Wasser und die vorangehend erwähnten Nachteile treten ein.

Eine weitere Möglichkeit zur Einstellung eines für die Fällung günstigen pH-Wertes ist in der DE 101 12 934 B4 genannt. Die darin erwähnte Belüftung von Faulschlamm mit anschließendem CO₂-Stripping ist jedoch sehr energieintensiv und verursacht deshalb hohe Zusatzkosten.

Die WO 00200101019735 A1 beschreibt ein Verfahren zur Entfernung von gelöstem Stickstoff und Phosphat aus dem wässrigen Anteil von Gülle mittels einer elektrochemischen Fällung.

Das darin beschrieben Verfahren benötigt relativ hohe elektrische Spannungen und ist damit energie- und kostenintensiv. Nachteilig ist auch, dass Stickstoff und Phosphat die organisch gebunden im wässrigen Anteil der Gülle vorliegen durch das beschriebene Verfahren nicht entfernt werden. Infolge dessen muss dieses Abwasser einer anschließenden Reinigung in einer Kläranlage zugeführt werden.

Weiterhin gelangt bei diesem Verfahren durch den Einsatz von aluminiumhaltigen Elektroden das Pflanzengift Aluminium in das Fällungsprodukt. Wird dieses Produkt auf den Boden gegeben, kann das Aluminium freigesetzt werden und das Pflanzenwachstum nachteilig beeinflussen.

Eine elektrochemische Fällung von MAP ist aus der WO 2007/009749 A1 bekannt. Das Verfahren benötigt jedoch die Zugabe von Ammoniumhydroxid zum Erreichen eines für die Fällung günstigen pH-Wertes und ist nicht geeignet für die Fällung anderer Phosphatsalze. Außerdem arbeitet dieses Verfahren ausschließlich unter Stromzufuhr.

Der Erfindung liegt die Aufgabe zugrunde, ein Verfahren bereitzustellen, mit dessen Hilfe phosphathaltige Abwässer aufbereitet und einer weiteren Verwendung zugeführt werden können. Des Weiteren liegt der Erfindung die Aufgabe zugrunde, ein Verfahren zu Gewinnung von Phosphatsalzen als Pflanzenhilfsstoffe bereitzustellen, das die oben gennannten Nachteile des Standes der Technik überwindet.

Die Aufgabe wird erfindungsgemäß gelöst durch ein Verfahren mit den Merkmalen des Anspruchs 1. Vorteilhafte Ausgestaltungen sind in den Ansprüchen 2 bis 6 beschirieben.

Die Erfindung stellt ein Verfahren zur Gewinnung von Phosphatsalzen als Pflanzenhilfsstoffe aus organischen Abwässern bereit. Dabei werden die im Abwasser und dessen festen Bestandteilen enthaltenen Phosphate vollständig entfernt, so dass die mit dem erfindungsgemäßen Verfahren behandelten Abwässer keiner weiteren Behandlung in einer Kläranlage bedürfen.

### Reaktionsgleichung zur Bildung von MAP:

Mg²⁺ + NH₄⁺ + PO₄³⁻ + 6H₂O -> MgNH₄PO₄ · 6H₂O

### Reaktionsgleichung zur Bildung von KMP:

Mg²⁺ + K⁺ + PO₄³⁻ + 6H₂O -> MgKPO₄ · 6H₂O

### Reaktionsgleichung für die Ablösung von Magnesium:

Mg(s) -> Mg₂⁺ + 2e⁻

### Reaktionsgleichung zu Bildung von Hydroxidionen:

2H₂O + 2e⁻ → 2OH⁻ + H₂

Durch die chemische Aktivität von Magnesium in Wasser, benötigt das erfindungsgemäße Verfahren für den normalen Betrieb nur sehr niedrige Stromstärken unter 1 A und niedrige Spannungen unter 1 V. Die Zufuhr von Strom verhindert Ablagerungen an der Elektrode, die im elektrischen Feld nicht stabil sind. Wegen des geringen Energieeinsatzes sind die Kosten für den Betrieb der Anlage sehr gering.

Dieses Verfahren ist sehr einfach in der Durchführung, verläuft sehr stabil und kommt zudem ohne den Einsatz gefährlicher oder aggressiver Chemikalien aus.

Das erfindungsgemäße Verfahren sieht vor, dass der Reaktor galvanisch betrieben wird. Durch den Prozess der Magnesiumablösung werden entsprechend der oben aufgeführten Reaktionsgleichung Elektronen freigesetzt. Das bedeutet dass das Verfahren keinen elektrischen Strom benötigt, sondern sogar Strom liefert.

Ein weiterer Vorteil des erfindungsgemäßen Verfahrens besteht darin, dass ein zur Ausfällung der Phosphatsalze erforderlicher pH-Wert durch einen elektrochemischen Prozess erreicht wird. Der zur Fällung von Phosphatsalzen erforderliche hohe pH-Wert wird nicht durch Zugabe gefährlicher oder aggressiver Chemikalien erreicht, sondern stellt sich durch die Bildung von Hydroxidionen (OH-), entsprechend oben angeführter Reaktionsgleichung selbsttätig ein.

Damit wird einerseits eine Verdünnung des Abwassers durch Zugabe von Lösungen vermieden. Andererseits kann ein hoher Durchsatz erzielt werden, da die Reaktion nicht durch die schlechte Löslichkeit der in Form von Salzen zugegebenen Lauge limitiert wird. Beide Punkte führen zu einer vorteilhaften Erhöhung des Wirkungsgrades und der Umsetzungsgeschwindigkeit des erfindungsgemäßen Verfahrens.

Besonders hilfreich ist es, wenn der Reaktor vertikal von oben nach unten durchströmt wird. Dadurch wird die Sedimentationsgeschwindigkeit der ausgefällten Phosphatsalze beschleunigt. Das bedeutet, der Reaktor kann bei gleichem Durchsatz kleiner gebaut werden.

Dabei werden die Kristalle in einem Filter von der Flüssigkeit abgetrennt. Dadurch können beim von oben nach unten durchströmten Reaktor die gefällten Phosphatsalze gemeinsam mit der Flüssigkeit aus dem Reaktor entnommen werden. Damit werden zusätzlicher Armaturen oder Vorrichtungen zum separaten Feststoffaustrag eingespart. Außerdem wird beim gemeinsamen Abzug von Phosphatsalzen und gereinigtem Abwasser in der Leitung eine turbulente Strömung erzeugt, die ein Zusetzen der Leitung durch die Kristalle verhindert.

Umgekehrt ist es auch hilfreich, wenn der Reaktor vertikal von unten nach oben durchströmt wird. Diese erfindungsgemäße Anordnung hat den Vorteil, dass eine automatische Trennung von Flüssigkeit, die nach oben strömt, und ausgefällten Salzen, die zu Boden sinken, stattfindet.

Das erfindungsgemäße Verfahren sieht vor, dass ein Ablauf des Reaktors wieder einem Zulauf des Reaktors zugeführt wird. Damit werden die im Ablauf enthaltenen Kristalle wieder dem Reaktor zugeführt und das noch zu reinigenden Abwasser wird mit Impfkristallen angereichert. Dadurch wird das Kristallwachstum beschleunigt, was sich positiv auf die Wirtschaftlichkeit des Verfahrens auswirkt.

Weiterhin wird vorgeschlagen, dass dem erfindungsgemäßen Verfahren ein anaerober Gärprozess vorgeschaltet ist. In diesem Gärprozess werden Stickstoff und Phosphor, die organisch gebunden sind zu anorganischen, wasserlöslichen Ionen abgebaut. Aus diesen Ionen, Ammonium (NH₄⁺) und Phosphat (PO₄³⁻) können die Phosphatsalze, insbesondere MAP und KMP gebildet werden. Damit wird in vorteilhafter Weise Stickstoff und Phosphat, die zum überwiegenden Teil, an oder in organischer Substanz bzw. Zellmasse gebunden sind, in eine wasserlösliche Form überführt und stehen damit der Produktion von Pflanzenhilfsstoffen zur Verfügung. Weiterhin entsteht bei diesem Prozess Biogas, das als Energielieferant erheblichen Marktwert besitzt.

Das erfindungsgemäße Verfahren arbeitet noch besser, wenn ein Teilstrom des Ablaufs des Reaktors dem anaeroben Gärprozess zugeführt wird. Durch eine Rückführung des gereinigten Abwassers in den Bioreaktor wird dort in vorteilhafter Weise die Konzentration an Ammonium gering gehalten. Eine zu hohe Ammoniumkonzentration im Bioreaktor würde den Gärprozess hemmen.

Weitere Vorteile und vorteilhafte Ausgestaltungen der Erfindung sind den nachfolgenden Figuren, deren Beschreibung und den Patentansprüchen entnehmbar. Dabei können alle in den Figuren, deren Beschreibung und den Patentansprüchen offenbarten Merkmale sowohl einzeln als auch in beliebiger Kombination miteinander erfindungswesentlich sein.

Es zeigen:
Figur 1 ein Ablaufschema eines Verfahrens zur Gewinnung von Phosphatsalzen aus einer phosphathaltigen Flüssigkeit.
Figur 2 eine schematische Darstellung einer ersten Ausgestaltung des erfindungsgemäßen Verfahrens zur Gewinnung von Phosphatsalzen
Figur 3 eine schematisch Darstellung einer zweiten Ausgestaltung des erfindungsgemäßen Verfahrens zur Gewinnung von Phosphatsalzen
Figur 4 eine schematische Darstellung einer dritten Ausgestaltung des erfindungsgemäßen Verfahrens zur Gewinnung von Phosphatsalzen und
Figur 5 eine schematische Darstellung des erfindungsgemäßen Verfahrens zur Gewinnung von Phosphatsalzen mit vorgeschaltetem Gärprozess

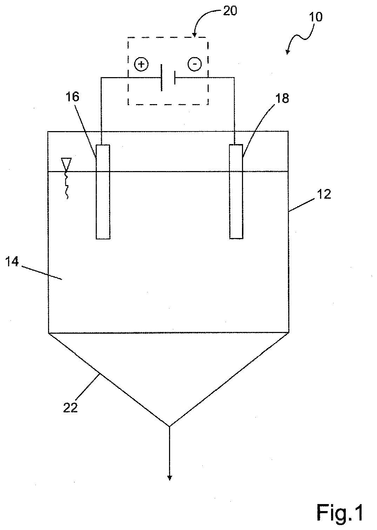

Figur 1 zeigt eine schematische Darstellung eines Reaktors 10. Der Reaktor 10 weist ein Gehäuse 12 auf. Das Gehäuse 12 dient dazu, eine phosphathaltige Flüssigkeit 14 aufzunehmen. In die Flüssigkeit 14 tauchen zwei Elektroden 16 und 18 ein, die mit einer Gleichstromquelle 20 verbunden sind.

Die Elektrode 16 ist eine sogenannte Opferanode, die mit dem Pluspol der Gleichstromquelle 20 verbunden ist, während die Elektrode 18 eine Kathode ist, welche mit dem Minuspol der Gleichstromquelle 20 verbunden ist.

Die Opferanode besteht aus einem magnesiumhaltigen Werkstoff, so dass Magnesiumionen in die Flüssigkeit 14 gelangen, sobald eine elektrische Spannung an die Elektroden 16 und 18 angelegt wird.

Das erfindungsgemäße Verfahren sieht einen galvanischen Betrieb des Reaktors 10 vor. Dabei werden die beiden Elektroden 16, 18, nicht an die externe Gleichstromquelle 20 angeschlossen. Die Magnesiumionen werden durch den galvanischen Betrieb in Lösung überführt.

Die gebildeten Phosphatsalze sind in wässriger Lösung schwer löslich und fallen als Kristalle aus, die sich am vorzugsweise kegelförmigen Boden 22 des Reaktors 10 absetzen. Von dort können sie auch während eines kontinuierlichen Betriebs des Reaktors 10 jederzeit entnommen werden.

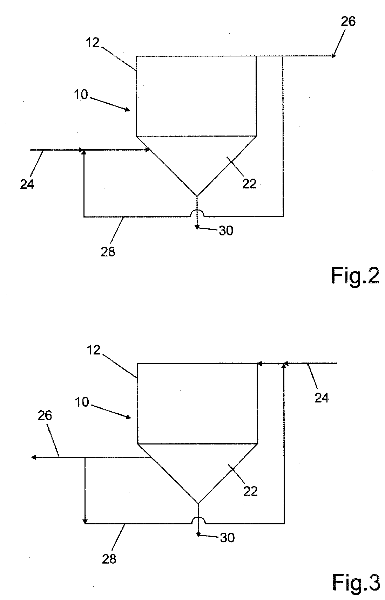

In Figur 2 ist der Reaktor 10 dargestellt. Seitlich am kegelförmigen Boden 22 befindet sich ein Zulauf 24. Ein Ablauf 26 befindet sich oben seitlich am Gehäuse 12 des Reaktors 10. Ein Rücklauf 28 verbindet den Ablauf 26 mit dem Zulauf 24. Unten am kegelförmigen Boden 22 befindet sich der Abzug 30.

Die phosphathaltige Flüssigkeit 14 strömt durch den Zulauf 24 von unten nach oben durch den Reaktor 10 und verlässt ihn durch den Ablauf 26. Die ausgefällten Phosphatsalze sinken im kegelförmigen Boden 22 nach unten und werden über den Abzug 30 entnommen. Über den Rücklauf 28 wird bereits gereinigte Flüssigkeit als Kreislaufwasser wieder dem Reaktor 10 zugeführt.

Figur 3 zeigt eine zweite erfindungsgemäße Ausgestaltung des Verfahrens, dabei wird der Reaktor 10 abwärts durchströmt. Der Zulauf 24 befindet sich oben seitlich am Gehäuse 12. Der Ablauf 26 befindet sich seitlich am kegelförmigen Boden 22. Der Rücklauf 28 verbindet den Ablauf 26 mit dem Zulauf 24. Unten am kegelförmigen Boden 22 ist der Abzug 30 angeordnet.

Die phosphathaltige Flüssigkeit 14 strömt durch den Zulauf von oben nach unten durch den Reaktor 10 und verlässt ihn durch den Ablauf 26. Ausgefällte Phosphatsalze werden über den Abzug 30 entnommen. Über den Rücklauf 28 wird bereits gereinigte Flüssigkeit als Kreislaufwasser wieder dem Reaktor zugeführt.

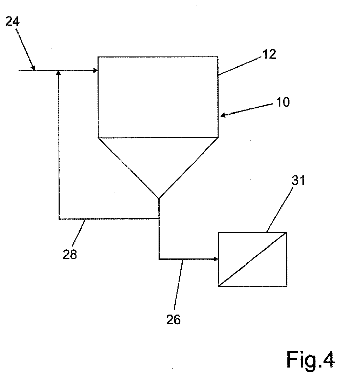

Figur 4 zeigt eine weitere Ausgestaltung des erfindungsgemäßen Verfahrens. Dabei wird der Reaktor 10 abwärts durchströmt. Der Zulauf 24 befindet sich oben seitlich am Gehäuse 12. Der Ablauf 26 befindet sich unten am kegelförmigen Boden 22 und führt von dort zu einem nachgeordneten Filter 31 Der Rücklauf 28 verbindet den Ablauf 26 mit dem Zulauf 24.

In dieser dritten erfindungsgemäßen Ausführung des Verfahrens werden die ausgefällten Phosphatsalze zusammen mit der gereinigten Flüssigkeit aus dem Reaktor 10 ausgetragen. Im anschließenden Filter werden die Phosphatsalze von der Flüssigkeit getrennt. Dabei werden, über den Rücklauf 28, dem Reaktor 10 Impfkristalle zuzgeführt.

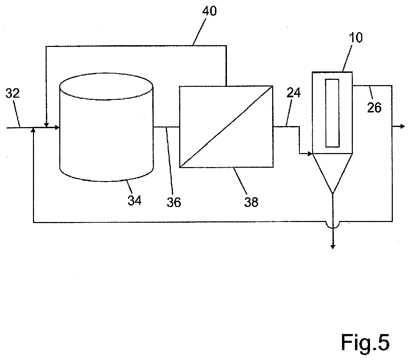

In Figur 5 ist eine Anwendung des erfindungsgemäßen Verfahrens bei der Gewinnung von Biogas aus phosphathaltigem Abwasser schematisch dargestellt.

Ein Abwasserstrom 32, organischer Herkunft, wird einem Bioreaktor 34 zugeführt. Dort werden durch anaerobe Gärprozesse die in den Feststoffen enthaltenen organischen Kohlenstoffverbindungen in Biogas und mineralische Reststoffe umgewandelt. Dabei entsteht ammonium - und phosphathaltiges Prozesswasser 36. Bevor das Prozesswasser 36 über den Zulauf 24 dem Reaktor 10 zugeführt wird, werden in einem Filter 38 eventuell enthaltene Feststoffe 40 abgetrennt. Die im Filter 38 zurückgehaltenen Feststoffe 40 werden wieder dem Bioreaktor 34 zugeführt. In dem Reaktor 10 werden in zuvor beschriebener Weise die Phosphatsalze abgetrennt. Der ammonium- und phosphatfreie Ablauf 26 wird teilweise in den Bioreaktor 34 zurückgeführt. Damit wird eine Hemmung des Gärprozesses, verursacht durch eine hohe Ammoniumkonzentration, verhindert.

## Patentansprüche

1. Verfahren zur vollständigen Kristallisation von MAP und KMP aus einer Flüssigkeit (14) und Rückgewinnung von MAP und KMP, in einem Reaktor (10), der mit zwei Gruppen von Elektroden (16, 18) unterschiedlicher Polarität ausgerüstet ist, wobei die Opferelektroden (16) aus einem magnesiumhaltigen Werkstoff bestehen, wobei folgende Verfahrensschritte ausgeführt werden
- Kontinuierliche Durchströmung des Reaktors (10) mit der Flüssigkeit (14);
- Ausfällung von KMP und MAP aus der Flüssigkeit (14);
- Absetzen von Kristallen im kegelförmigen Boden (22) des Reaktors (10) und
- Austrag der Kristalle über einen Abzug (30) sowie
- Abtrennen der Kristalle in einem Filter (31) von der Flüssigkeit (14),
**dadurch gekennzeichnet, dass** der Reaktor (10) galvanisch betrieben wird und wobei ein Ablauf (26) des Reaktors (10) wieder einem Zulauf (24) des Reaktors zugeführt wird und so das noch zu reinigende Abwasser mit Impfkristallen angereichert wird.

2. Verfahren nach Anspruch 1, **dadurch gekennzeichnet, dass** ein zur Ausfällung von MAP und KMP erforderlicher pH-Wert durch eine elektrochemische Dissoziation erreicht wird.

3. Verfahren nach einem der Ansprüche 1 oder 2, **dadurch gekennzeichnet, dass** der Reaktor (10) vertikal von oben nach unten durchströmt wird.

4. Verfahren nach einem der Ansprüche 1 oder 2, **dadurch gekennzeichnet, dass** der Reaktor (10) vertikal von unten nach oben durchströmt wird.

5. Verfahren nach einem der vorangehenden Ansprüche, **dadurch gekennzeichnet, dass** ein anaerober Gärprozess (34) vorgeschaltet ist.

6. Verfahren nach Anspruch 5, **dadurch gekennzeichnet, dass** ein Teilstrom des Ablaufs des Reaktors (10) dem anaeroben Gärprozess (34) zugeführt wird.

## Claims

1. Method for complete crystallization of MAP and PMP from a liquid (14) and recovery of MAP and PMP in a reactor (10), which is equipped with two groups of electrodes (16, 18) of different polarity, wherein the sacrificial electrodes (16) are comprised of a magnesium-containing material, wherein the following method steps are performed
- continuous flow of the liquid (14) through the reactor (10) ;
- precipitation of PMP and MAP from the liquid (14);
- deposition of crystals in the conical bottom (22) of the reactor (10); and
- removal of the crystals via a removal device (30); as well as
- separation of the crystals in a filter (31) from the liquid (14),
**characterized in that** the reactor (10) is operated galvanically and whereas an outflow (26) of the reactor (10) is returned to an inlet (24) of the reactor and in this way the wastewater that is still to be purified is enriched with crystallization seeds.

2. Method according to claim 1 **characterized in that** a pH value that is required for precipitation of MAP and PMP is received by electrochemical dissociation.

3. Method according to one of the claims 1 or 2, **characterized in that** the reactor (10) is flowed through vertically from top to bottom.

4. Method according to one of the claims 1 or 2, **characterized in that** the reactor (10) is flowed through vertically from bottom to top.

5. Method according to one of the preceding claims, **characterized in that** an anaerobic fermentation process (34) is arranged upstream.

6. Method according to claim 5, **characterized in that** a partial flow of the outflow of the reactor (10) is supplied to the anaerobic fermentation process (34).

## Revendications

1. Procédé pour une cristallisation complète de MAP et KMP à partir d'un liquide (14) et une récupération du MAP et KMP, dans un réacteur (10), qui est équipé de deux groupes d'électrodes (16, 18) de polarité différente, dans lequel les électrodes sacrificielles (16) sont constituées d'un matériau contenant du magnésium, dans lequel les étapes de procédé suivantes vont être exécutées
- traversée continue du réacteur (10) par le liquide (14) ;
- précipitation de KMP et MAP à partir du liquide (14) ;
- dépôt de cristaux dans le fond de forme conique (22) du réacteur (10), et
- sortie des cristaux par l'intermédiaire d'une évacuation (30), ainsi que
- séparation des cristaux et du liquide (14) dans un filtre (31),
**caractérisé en ce que** le réacteur (10) est exploité de manière galvanique, et dans lequel un écoulement de sortie (26) du réacteur (10) est mené de nouveau à un écoulement d'entrée (24) du réacteur, et de sorte qu'encore des eaux usées à purifier sont enrichies avec des cristaux d'ensemencement.

2. Procédé selon la revendication 1, **caractérisé en ce que** pour la précipitation de MAP et de KMP, une valeur de pH nécessaire est obtenue par dissociation électrochimique.

3. Procédé selon l'une quelconque des revendications 1 ou 2, **caractérisé en ce que** le réacteur (10) est à écoulement traversant verticalement de haut en bas.

4. Procédé selon l'une quelconque des revendications 1 ou 2, **caractérisé en ce que** le réacteur (10) est à écoulement traversant verticalement de bas en haut.

5. Procédé selon l'une quelconque des revendications précédentes, **caractérisé en ce qu'**un processus de fermentation anaérobie (34) intervient en amont.

6. Procédé selon la revendication 5, **caractérisé en ce qu'**un flux partiel de l'écoulement de sortie du réacteur (10) est mené au processus de fermentation anaérobie (34).
